# EUROPEAN PATENT SPECIFICATION

(11) **EP 1 848 153 B1**
(45) Date of publication and mention of the grant of the patent: **24.02.2010**
(21) Application number: 06290664.9
(22) Date of filing: 20.04.2006
(51) Int. Cl.: H04L 12/28, H04W 12/12

(54) **A method of providing replay protection**
Verfahren zum Wiedergabeschutz
Procédé permettant la protection contre la retransmission

(43) Date of publication of application: 24.10.2007
(73) Proprietor: Alcatel Lucent, 75008 Paris (FR)
(72) Inventor: De Juan Huarte, Federico, 75014 Paris (FR); Conte, Alberto, 75014 Paris (FR)
(74) Representative: Schmidt, Werner Karl

(56) References cited:
- EP-A- 1 337 125
- US-A1- 2004 008 689

## Description

### Field of the invention

The invention relates to a method of optimizing replay protection, to a mobile communication network, to a mobile communication network component, and to a computer program product adapted to performing the method in accordance with the invention.

### Background and related art

An active connection between a mobile station and a base station of a mobile communication network is generally established via an air interface. The air interface can for example be compliant with the IEEE 802.16 standard or with the IEEE 802.11 standard. The functions of a protocol can be divided into a series of layers in accordance with the open systems interconnection reference model (OSI model). One of these layers is the so called MAC layer. One of the main tasks of the MAC layer is to guarantee privacy and security for the active connection established between the mobile station and the base station of the mobile communication network. Privacy and security aspects relate to authentication, data integrity of the exchanged data, data confidentiality and replay protection.

Replay protection refers to protection of an active connection against eavesdropping. In order to provide replay protection during an active connection, each packet which is sent by the mobile station or by the base station comprises a packet number. The packets sent by the mobile station or the base station fulfill the condition that the packet numbers of the packets increase from one packet to a subsequent packet. Thus, the packet number of a sent packet is larger which respect to the packet number of a foregoing packet. In the replay protection mechanism, the receiver, for example the base station, checks if the packets send by the transmitter, the mobile station, are received in an order so that the packet number of an incoming packet is larger than the packet number of the previously received packet. If this is not the case, then this would hint to a replayed message which has been copied by an eavesdropper and sent with a time delay so that it arrives later at the receiver though it has been sent earlier by the transmitter. This replay protection mechanism is applicable to both, management and data traffic.

If a handover of the active connection of a mobile station from a base station to a second base station of the mobile communication network is carried out, then the second base station cannot perform replay protection for the first packet that is received immediately after the handover because the second base station lacks information about the packet numbers that have been previously exchanged between the previous base station and the mobile station.

EP 1 337 125 A2 discloses a method for relocating serving radio network subsystems (SRNS) in a mobile communication system which transmits radio resource information including a ciphering parameter from a source radio network controller (RNC) to a target RNC, modifies the ciphering parameter to coincide with a deciphering parameter which a user terminal uses when out-of-sequence data is received, ciphers a data unit based on the modified ciphering parameter, and transmits the ciphered data unit from the target RNC to the user terminal. The system and method transmits radio resource information from a source RNC to a target RNC and then transmits a data unit from the target RNC to a user terminal. In this case, the data unit including a transmission sequence number which consecutively follows a sequence number of a data unit last transmitted from the source RNC to the user terminal.

There is a need for an improved method of optimizing replay protection in a mobile communication network, an improved mobile communication network, an improved component of the mobile communication network, and a computer program product that is adapted for performing the method in accordance with the invention, which is defined by the independent claims.

### Summary of the invention

In accordance with an embodiment of the invention, there is provided a method of optimizing replay protection in a mobile communication network, wherein the mobile communication network comprises a first base station and a second base station, and wherein the method comprises the step of detecting during an active connection between a mobile station and a first base station that a handover of the mobile station from the first base station to the second base station is scheduled, wherein in the active connection a sequence of uplink packets is received from the mobile station by the first base station, wherein each uplink packet of the sequence of uplink packets comprises an uplink packet number, and wherein the uplink packet numbers of consecutive uplink packets fulfill a given condition. The method in accordance with the invention further comprises the step of sending a first value to the second base station before the handover, wherein the first value relates to a received uplink packet number.

The method in accordance with the invention is particularly advantageous as by sending the first value which relates to a received uplink packet number from the first base station to the second base station, the second base station is able to perform a replay protection for the first packet that is received from the mobile station. Thus, a smooth handover without comprising privacy of the active connection can be performed.

In accordance with an embodiment of the invention, the first value corresponds to the uplink packet number of the uplink packet that is used for requesting a handover or a posteriori uplink packet.

In accordance with an embodiment of the invention, the first value is only valid for a given period of time. The given period of time can for example relate to the validity of the handover request. If after the given period of time the handover is not performed, the first value is not valid any more and a new handover request is associated so that a new first value is sent from the first base station to the second base station. The first value can for example comprise a time stamp reflecting the point in time when the packet with the packet number to which the first value relates has been received so that the first value can be replaced by a new first value after the given period of time with respect to the time stamp has been spent.

In accordance with an embodiment of the invention, the first base station communicates to the second base station that the first value which has been previously sent is not valid any more if the scheduled handover from the first base station to the second base station is cancelled.

In accordance with an embodiment of the invention, a sequence of downlink packets is sent in said active connection by said first base station to said mobile station, wherein each downlink packet of said sequence of downlink packets comprises a downlink packet number, wherein the downlink packet numbers of consecutive downlink packets fulfill said given condition, and wherein the method in accordance with the invention further comprises the step of sending a second value to the second base station, wherein the second value relates to a downlink packet number that has been sent to the mobile station. The base station does not only receive uplink packages with uplink packet numbers but also sends downlink packets with downlink packet numbers. The second value that is transferred to the second base station relates to a downlink packet number. The second base station can then use the second value as a reference for a packet number in the first packet that is sent to the mobile station. The mobile station is then able to perform a replay protection for the first packet that is received from the second base station after the connection of the mobile station has been handed over to the second base station.

In accordance with an embodiment of the invention, the first base station sends the second value to the second base station, wherein the second value corresponds to a downlink packet number that has been sent by the first base station after detection of a scheduled handover and that is increased by a certain quantity which is proportional to the amount of messages that can be expected before the handover is carried out. In the case when the amount of downlink data packages exceeds the quantity, the first base station sends a new second value to the second base station which is then used instead of the previously sent second value by the second base station for replay protection.

In accordance with an embodiment of the invention, the given condition is that the uplink packet numbers of consecutive uplink packets increase and that the downlink packet numbers of consecutive downlink packet increase. The usage of the given condition as described here is particularly advantageous as this is compliant with standard conditions of the IEEE802.16 standard.

In accordance with an embodiment of the invention, the succession of the uplink packet numbers and downlink packet numbers fulfill said given condition.

In accordance with an embodiment of the invention, the succession of the uplink packet numbers and downlink packet numbers correspond to a single monotonously growing sequence. The uplink and downlink packet numbers are taken from a single series with elements that are larger than preceding elements. The first base station and the mobile station use a single series of uplink and downlink packet numbers. When the connection of the mobile station has been transferred to the second base station, the first packet sent by any of them, the mobile station or the second base station, will be larger than the one expected by the other since the first value that relates to an uplink packet number has been given to the second base station and since the first value refers implicitly to a downlink packet number that has been used by the first base station as the first base station and the second base station use uplink and downlink packet numbers of the single series.

In accordance with an embodiment of the invention, the first value equals the uplink packet number of the uplink packet which is received when the scheduled handover is detected. The usage of the packet number of the uplink packet received when the scheduled handover is detected has the advantage that the first value is already been transmitted to the second base station when the actual handover is performed. This ensures a smooth handover of the mobile station from the first base station to the second base station as the first value is already available to the second base station when the connection with the mobile station is taken over from the first base station.

In accordance with an embodiment of the invention, the first value is equal to the uplink packet number of the uplink packet that is received when the scheduled handover is detected and increased by a given quantity. In a mobile communication network there is typically a handover request time defined. The handover request time limits the amount of packages that can be exchanged between a mobile station and the first base station in the time between the detection of the handover and the actual handover. The given quantity can for example be set to correspond to the handover request time.

In accordance with an embodiment of the invention, the mobile communication network comprises a time base, wherein said first base station and said second base station are synchronized by use of the time base, and wherein the downlink packet number of the sequence of downlink packets is a function of the time given by the time base. The function can for example be a monotonously growing function in which the time as given by the time base is used as an argument. This ensures that the downlink packet numbers of consecutive packets increase monotonically. If the second base station employs the same function for generating the download packet numbers, then the second value needs not to be transmitted to the second base station.

In accordance with an embodiment of the invention, the first base station and the mobile station as well as the second base station and the mobile station communicate via an air interface, wherein the air interface is compliant with any of the wireless IEEE standards (e.g. 802.16, 802.11).

In another aspect the invention relates to a method of optimizing replay protection in a mobile communication network, wherein the mobile communication network comprises a first base station and a second base station, and wherein the method comprises the step of receiving a first value by the second base station from the first base station, wherein the first base station has an active connection with a mobile station, wherein in said active connection a sequence of uplink packets is received from the mobile station by the first base station, wherein each uplink packet of the sequence of uplink packets comprises an uplink packet number, wherein the uplink packet numbers of consecutive uplink packets fulfill a given condition, wherein the first value relates to a received packet number. The method in accordance with the invention further comprises the step of taking over the active connection with the mobile station from the first base station and the step of using the first value for replay protection in the active connection between the second base station and the mobile station.

In accordance with an embodiment of the invention, the second base station only takes over the active connection and communicates further with the mobile station if the first value and the first received uplink packet number that is received by the second base station fulfill the given condition. Otherwise, the second base station demands for a reauthentication of the mobile terminal against the communication network or drops the active connection with the mobile terminal.

In accordance with an embodiment of the invention, the second base station only takes over the active connection from the first base station if it has received said first value. Otherwise, the second base station demands for a reauthentication of the mobile terminal against the communication network or drops the active connection with the mobile terminal.

In accordance with an embodiment of the invention, the second base station receives a continuation of the sequence of uplink packets of the active connection and the replay protection after the handover is performed by comparing the lowest received uplink packet number with the first value.

In accordance with an embodiment of the invention, the method further comprises receiving a second value from the first base station, wherein the first base station sends in the active connection a sequence of downlink packets to the mobile station, wherein each downlink packet of the sequence of downlink packets comprises a downlink packet number, wherein the downlink packet numbers of consecutive downlink packets fulfill the given condition, and wherein the second value relates to a sent downlink packet number.

In accordance with an embodiment of the invention, the second base station only takes over the active connection from the first base station if it has received said second value. Otherwise, the second base station demands for a reauthentication of the mobile terminal against the communication network or drops the active connection with the mobile terminal.

In accordance with an embodiment of the invention, the second value is used for replay protection in the active connection after the mobile station has been handed over the second base station.

The packet numbers could also be grouped into two different address spaces. The first address space could be the range from 0x00000000 to 0x7FFFFFFF and the second address space could be the range from 0x80000000 to 0xFFFFFFFF. Packets numbers of packets that are exchanged between the mobile station and the first base station could be taken from the first address space. The address space could be switched to the second address space when the connection is handed over to the second base station so that the packet numbers of packets that are exchanged between the mobile station and the second base station would be taken from the second address space. Consequently, the address space would be switched back to the first address space after a second handoff. This has however the disadvantage that the condition that the packet numbers have to increase is violated directly after the second handoff since during the connection with the second base station packet numbers of the second address space are used while after the second handoff a packet number of the first address space would be used. Furthermore, if the first and second address space would be used for replay protection, the implementation of the mobile station would be unnecessarily complicated since it would require the mobile station to switch the address spaces during handover and it would require to synchronize the mobile station and the base stations as both are required to work in the same address space. Additionally, the double amount of network resources would be used, since the packet numbers have to be maintained and transferred for both address spaces in order to verify and ensure replay protection. In contrast, the usage of the methods in accordance with the invention ensures that the set condition, e.g. the packet numbers have to increase monotonically, is also fulfilled after a handover. The network resources are further minimized with respect to the scenario described above. The methods in accordance with the invention is furthermore advantageous as there is no impact on the mobile station.

In another aspect the invention relates to a mobile communication network which comprises means for detecting during an active connection between a mobile station and a first base station of the mobile communication network that a handover of the mobile station from the first base station to a second base station of the mobile communication network is scheduled, wherein in the active connection a sequence of uplink packets is received from the mobile station by the first base station, wherein each uplink packet of the sequence of uplink packets comprises an uplink packet number, wherein the uplink packet numbers of consecutive uplink packets fulfill a given condition. The mobile communication network further comprises means for sending a first value to the second base station wherein the first value relates to a received uplink packet number and means for receiving the first value. The mobile communication network further comprises means for using the first value for replay protection in the active connection between the second base station and the mobile station after the active connection has been handed over from the first base station to the second base station.

In accordance with an embodiment of the invention, the mobile communication network further comprises means for sending a sequence of downlink packets from the first base station to the mobile station during the active connection, wherein each packet of the sequence of downlink packets comprises a downlink packet number, wherein the downlink packet numbers of consecutive downlink packets fulfill said given condition and means for sending a second value to the second base station, wherein the second value relates to a downlink packet number that has been sent by the first base station. The mobile communication network further comprises means for using the second value for replay protection in the active connection between the second base station and the mobile station after said active connection has been handed over from said first base station to said second base station.

In accordance with an embodiment of the invention, the mobile communication network further comprises a time base, means for synchronizing the first base station and the second base station via the time base and means for using the time given by the time base for generating the downlink packet numbers.

In accordance with an embodiment of the invention, the protocols employed by the mobile communication network for communication with the mobile station are compliant with any of the IEEE standards (e.g. 802.16).

In another aspect the invention relates to a mobile communication network component which comprises means for detecting during an active connection between a mobile station and a first base station that a handover of the mobile station from the first base station to the second base station is scheduled, wherein in the active connection a sequence of uplink packets is received from the mobile station from the first base station, wherein each uplink packet of the sequence of uplink packets comprises an uplink packet number, and wherein the uplink packet numbers of consecutive uplink packets fulfill a given condition. The mobile communication network component further comprises means for sending a first value to the second base station before the handover, wherein the first value relates to a received uplink packet number. The mobile communication network component further comprises means for receiving the first value and means for using the first value for replay protection in the active connection between the second base station and the mobile station after said active connection has been handed over from said first base station to the second base station.

In accordance with an embodiment of the invention, the mobile communication network component further comprises means for sending a sequence of downlink packets, wherein each downlink packet of the sequence of downlink packets comprises a downlink packet number, wherein the downlink packet numbers of consecutive downlink packets fulfill the given condition and means for sending a second value to the second base station, wherein the second value relates to a downlink packet number that has been previously sent to a mobile station.

In accordance with an embodiment of the invention, the mobile communication network component is a base station, e.g. a base station, or a component of the base station.

In another aspect the invention relates to a computer program product comprising computer executable instructions, wherein the instructions are adapted to performing the steps of detecting during an active connection between a mobile station and a first base station of a mobile communication network that a handover of the mobile station from the first base station to a second base station of the mobile communication network is scheduled, wherein in the active connection a sequence of uplink packets is received from the mobile station by the first base station, wherein each uplink packet of the sequence of uplink packets comprises an uplink packet number, and wherein the uplink packet numbers of consecutive uplink packets fulfill a given condition and the step of sending a first value to the second base station before the handover, wherein the first value relates to a received uplink packet number.

In another aspect the invention relates to a computer program product comprising computer executable instructions, wherein the instructions are adapted to performing the step of receiving a first value from a first base station of a mobile communication network, wherein the first base station has an active connection with a mobile station, wherein in the active connection a sequence of uplink packets is received from the mobile station by the first base station, wherein each uplink packet of the sequence of uplink packets comprises an uplink packet number, wherein the uplink packet numbers of consecutive uplink packets fulfill a given condition, and wherein the first value relates to a packet number that has been received by the first base station. The instructions are further adapted to performing the step of taking over the active connection with the mobile station from the first base station and using the first value for replay protection in selective communication between a second base station of the mobile communication network and the mobile station.

### Brief description of the drawings

In the following preferred embodiments of the invention will be described in greater detail by way of example only making reference to the drawings in which:
- Figure 1: shows a block diagram of a mobile communication network communicating with a mobile station,
- Figure 2: depicts a flow diagram of the basic steps performed by the method in accordance with the invention,
- Figure 3: shows a block diagram of a mobile communication network communicating with a mobile station, and
- Figure 4: shows a sequence of operation diagram.

### Detailed description

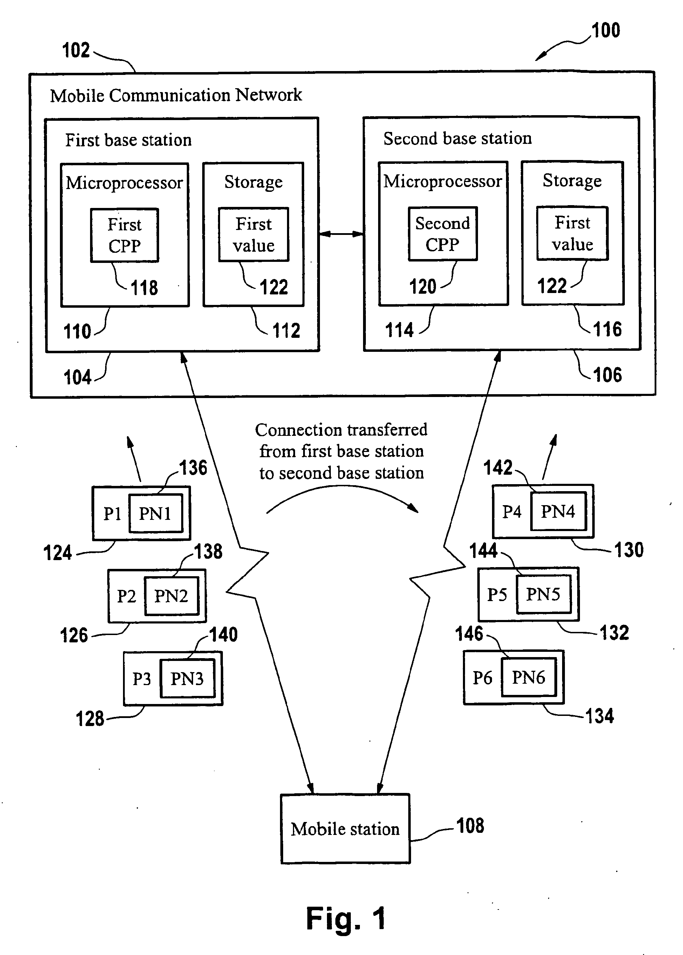

Fig. 1 shows a block diagram 100 of a mobile communication network 102 communicating with a mobile station 108. The mobile communication network 102 comprises a first base station 104 and a second base station 106. The first base station 104 comprises a microprocessor 110 and a storage device 112, such as a hard disk drive. The second base station 106 comprises also a microprocessor 114 and a storage device 116. The microprocessor 110 executes a first computer program product 118 and the microprocessor 114 executes a second computer program product 120.

The first base station 104 holds an active connection to the mobile station 108. During the active connection, the first base station 104 receives a sequence of uplink packets 124, 126, 128 from the mobile station 108. Each uplink packet of the sequence of uplink packets comprises an uplink packet number. The uplink packet 124 comprises the uplink packet number 136, the uplink packet 126 comprises the uplink packet number 138, and the uplink packet 128 comprises the uplink packet number 140. The uplink packet numbers of consecutive uplink packets that are sent from the mobile station 108 to the first base station 104 fulfill a given condition. The given condition can for example be that the uplink numbers of consecutively sent uplink packets increases. Thus, the uplink packet number 136 is smaller than the uplink packet number 138 which is smaller than the uplink packet number 140.

The first base station 104 receives the packets and determines if the packet numbers actually fulfill the preset condition. Remaining at the example given above it is for example checked if the uplink packet number of a received uplink packet is indeed larger than the uplink packet number of the preceding uplink packet. If the received uplink packet number would be smaller than the uplink packet number of the preceding uplink packet then this would be a hint that the packet has been intercepted by an interceptor, copied and resent by the interceptor with a time delay so that packets that have been sent later by the mobile station 108 have already been received by the base station 104.

The procedure as described above for checking whether the received packet numbers actually fulfill the given condition is the procedure that is actually performed in order to uncover a replay of a packet by an eavesdropper.

If it is detected that the connection of the mobile station 108 is scheduled to be handed over from the first base station 104 to the second base station 106, then a first value 122 that relates to a received uplink packet number 136, 138 or 140 is sent to the second base station 106. For detection of a scheduled handover, the microprocessor 110 executes the computer program 118. The computer program product 118 reads out each uplink packet number and stores it on the storage device 112. Once the scheduled handover is detected, the last stored value is for example taken to be the first value 122 and sent to the second base station 106. Alternatively, the first value 122 could be taken to be the sum of a preset quantity and the last stored value.

The second base station 106 receives the first value 122 before the actual handover is performed. The first value 122 is for example stored by the computer program product 120 on the storage device 116. After the active connection has been transferred from the first base station 104 to the second base station 106, the second base station 106 receives a sequence of uplink packets 130, 132, 134 whereof each packet holds an uplink packet number 142, 144 and 146. The uplink packet number 142, 144, and 146 also supposed to fulfill the given condition as mentioned above. The first uplink packet number, e.g. uplink number 142, that has been received from the mobile station 108 by the second base station 106 is checked against the first value 122 if the given condition also holds between the first value 122 and the uplink packet number 142. Taking the example already given above, it is therefore checked if the first value 122 is indeed smaller than the uplink packet number 142. If the given condition is not fulfilled between the first value 122 and the uplink packet number 142, then this is an indication that the first packet 130 received by the second base station 106 has been replayed.

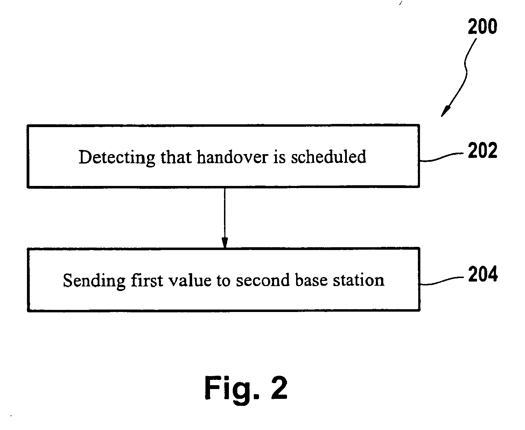

Fig. 2 shows a flow diagram 200 of the basic steps performed by a method in accordance with the invention. In step 202 it is detected during an active connection between a mobile station and a first base station of a mobile communication network that a handover of the mobile station from the first base station to a second base station of the mobile communication network is scheduled, wherein in the active connection a sequence of uplink packets is received from the mobile station by the first base station, wherein each uplink packet of the sequence of uplink packets comprises an uplink packet number, wherein the uplink packet numbers of consecutive uplink packets fulfill a given condition. In step 204 a first value is sent to the second base station before the handover, wherein the first value relates to a received uplink packet number.

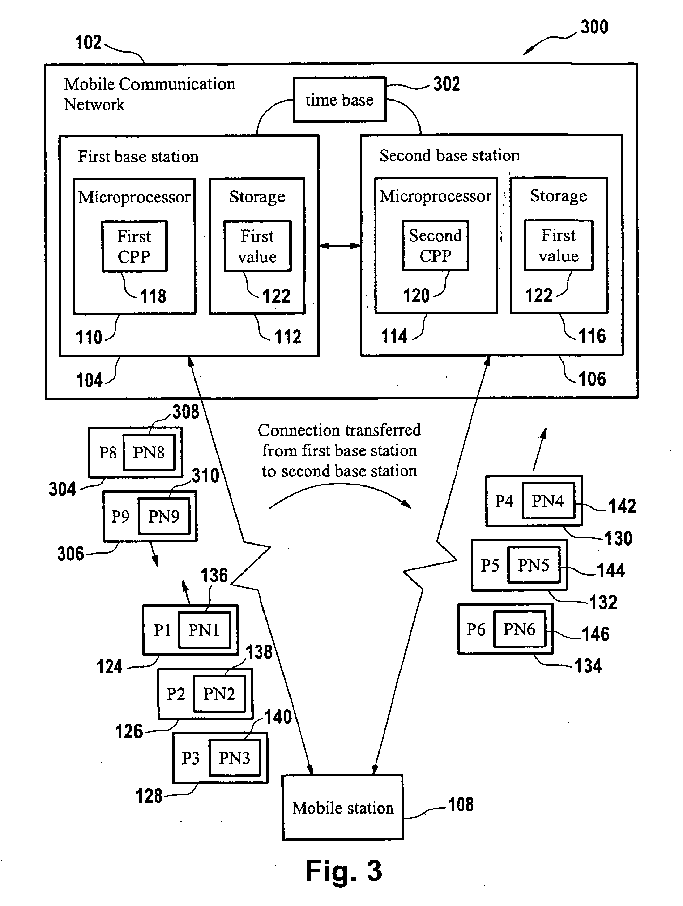

Fig. 3 shows a block diagram of the mobile communication network 102 communicating with a mobile station 108. As Fig. 3 is similar to Fig. 1, the reference numerals of the same components have been taken over from Fig. 1. The mobile communication network 102 further comprises a time base 302. The time base 302 is used to synchronize the first base station 104 and the second base station 106.

The first base station 104 as well as the second base station 106 do not only receive uplink packets from the mobile station 108. The base stations 104 and 106 also send downlink packets to the mobile station 108 which are checked for replay protection after they have been received from the mobile station. The first base station 104 sends for example the downlink packets 304 and 306. The downlink packet 304 comprises a downlink packet number 308 and the downlink packet 306 comprises a downlink packet number 310. The downlink packet numbers fulfill a preset condition. The condition can for example be that the downlink packet number of a packet is larger than the downlink packet number of a foregoing packet. Thus, in accordance with the condition, packet number 308 would be larger than packet number 310. The mobile station 108 performs relay protection by checking if the downlink packets still fulfill the condition after they have been received by the mobile station 108.

The succession of the uplink packet numbers and downlink packet numbers can correspond to a single monotonously growing sequence. For example packet number 136 could be equal to "1", packet number 138 could be equal to "2", and packet number 140 could be equal to "3". If the packets 304 and 306 would then be sent after reception of these packets numbers, the packet number 308 would correspond to "4" and packet number 310 would equal to "5". The first value 122 that is transferred to the second base station can then relate to a packet number. For example the first value 122 could be equal to "5". The packet number of the packet, e.g. packet number 142 of packet 130, which is the first packet sent after the handover to the second base 106 would then be "6" (The packet is usually sent after reception of packet 304; the mobile station 108 therefore knows which packet number to use). The packet number 142 is then checked against the first value 122 for replay protection.

If the second base station 106 sends a downlink packet to the mobile station before it receives an uplink packet, then the base station will add a packet number, for example "6", which is larger than the first value 122, which has been set to "5", to this downlink packet. The mobile station would then check the added packet number "6" against the preceding received downlink packet number after reception of the first downlink packet.

Alternatively, the downlink and uplink packet numbers could also be split. Both, uplink and downlink packet numbers could independently fulfill the preset condition, which could be that the uplink and downlink packet numbers have to increase independently. For example, the uplink packets numbers 136, 138, 140, 142, 144, and 146 could correspond to "1", "2", "3", "4", "5", and "6", respectively. In contrast, the downlink packet numbers, such as downlink packet numbers 308 and 310, could be obtained from a monotonously growing function. For example, the packet number 308 would be taken to be the function value of the function in which the actual time as given by the time base 302 is used as an argument. If the time as given by the time base 302 is used to generated the downlink packet numbers then the second value relating that has been send by the first base station needs not to be transferred to the second base station.

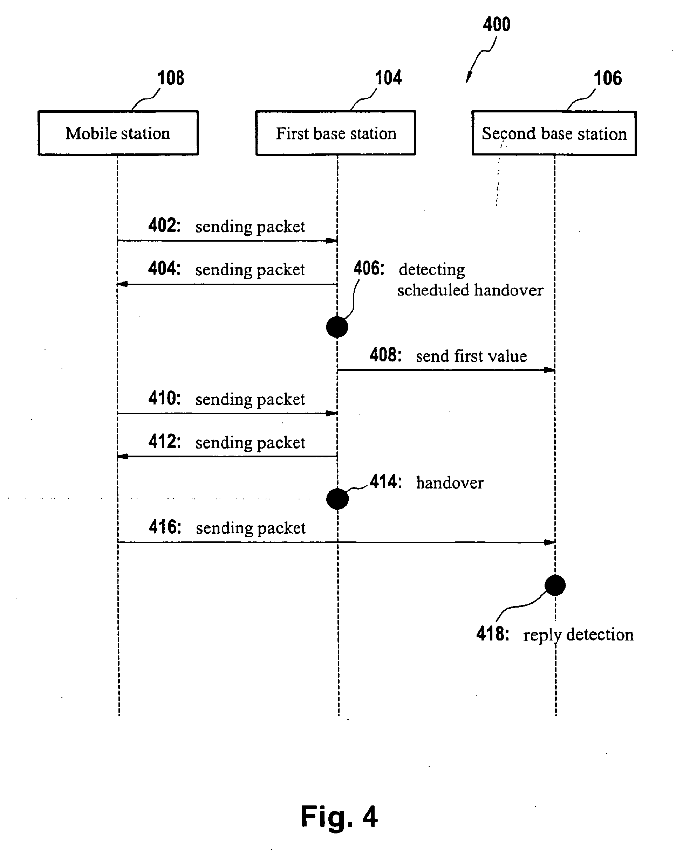

Fig. 4 shows a sequence of operation diagram. The sequence of operation diagram depicts the steps that are performed and the messages that are exchanged between the mobile station 108, the first base station 104, and the second base station 106. In step 402 the mobile station 108 sends packets to the first base station 104 and the first base station sends in step 404 packets back to the mobile station 108 during an active connection. In step 406 it is detected that a handover is scheduled for the mobile station 108 from the first base station 104 to the second base station 106. In step 408 a first value relating to a packet number of the packets that have been received by the first base station or sent by the first base station 104 is sent to the second base station. In step 410 communication between the mobile station 108 and the first base station 104 proceeds since packets are still sent from the mobile station 108 to the first base station 104. In step 412 packets are further sent from the first base station 104 to the mobile station 108. In step 414 the actual handover takes place. In step 416 the mobile station 108 sends packets to the second base station 106. In step 418 replay detection and protection is performed by comparing the packet number of the first packet received in step 416 from the mobile station 108 with the first value that has been received in step 408.

### List of Reference Numerals

| | |
|---|---|
| 100 | Block diagram |
| 102 | Mobile communication network |
| 104 | First base station |
| 106 | Second base station |
| 108 | Mobile station |
| 110 | Microprocessor |
| 112 | Storage device |
| 114 | Microprocessor |
| 116 | Storage device |
| 118 | First computer program product |
| 120 | Second computer program product |
| 122 | First value |
| 124 | Packet |
| 126 | Packet |
| 128 | Packet |
| 130 | Packet |
| 132 | Packet |
| 134 | Packet |
| 136 | Packet number |
| 138 | Packet number |
| 140 | Packet number |
| 142 | Packet number |
| 144 | Packet number |
| 146 | Packet number |
| 200 | Flow diagram |
| 300 | Block diagram |
| 302 | Time base |
| 304 | Packet |
| 306 | Packet |
| 308 | Packet number |
| 310 | Packet number |
| 400 | Sequence of operation diagram |

## Claims

1. A method of optimizing replay protection in a mobile communication network (102), said mobile communication network (102) comprising a first base station (104) and a second base station (106), said method comprising:
- detecting during an active connection between a mobile station (108) and said first base station (104) that a handover of said mobile station (108) from said first base station (104) to said second base station (106) is scheduled, wherein in said active connection a sequence of uplink packets (124, 126, 128) is received from said mobile station (108) by said first base station (104), wherein each uplink packet of said sequence of uplink packets (124, 126, 128) comprises an uplink packet number (136, 138, 140), wherein the uplink packet numbers (136, 138, 140) of consecutive uplink packets (124, 126,128) fulfil a given condition;
- sending a first value (122) to said second base station (106) before said handover, said first value (122) relating to a received uplink packet number (136, 138, 140), **characterized by** the first value having a time stamp, wherein the first value is only valid for a given period of time with respect to the time stamp, wherein the second base station uses the first value (122) for said replay protection in said active connection between said second base station (106) and said mobile station (108) if said first value is valid after taking over said active connection with said mobile station (108) from said first base station (104).

2. The method of claim 1, wherein in said active connection a sequence of downlink packets (304, 306) is sent by said first base station (104) to said mobile station (108), wherein each downlink packet of said sequence of downlink packets (304, 306) comprises a downlink packet number (308, 310), wherein the downlink packet numbers (308, 310) of consecutive downlink packets (304, 306) fulfil said given condition, said method further comprising sending a second value to said second base station (106), said second value relating to the downlink packet number (308, 310) sent previously to said mobile station (108).

3. The method of claim 1 or 2, wherein said given condition is that the uplink packet numbers of consecutive uplink packets increase, and that the downlink packet numbers of consecutive downlink packets increase.

4. The method of any one of the claims 1 to 3, wherein said mobile communication network (102) comprises a time base (302), wherein said first base station (104) and said second base station (106) are synchronized via said time base (302), wherein said downlink packet number (308, 310) is a function of the time given by said time base (302).

5. A mobile communication network component (102) comprising:
- means for detecting during an active connection between a mobile station (108) and a first base station (104) of a mobile communication network (102) that a handover from said first base station (104) to a second base station (106) of said mobile communication network (102) is scheduled, wherein in said active connection a sequence of uplink packets (124, 126, 128) is received by said first base station (104) from said mobile station (108), each packet of said sequence of uplink packets comprising an uplink packet number (136, 138, 140), and wherein the uplink packet numbers (136, 138, 140) of consecutive uplink packets (124, 126,128) fulfil a given condition;
- means for sending a first value (122) to said second base station, said first value (122) relating to a received uplink packet number (136, 138, 140), **characterized by** the first value being only valid for a given period of time with respect to the time stamp;
- means for receiving said first value (122);
- means for using said first value (122) for replay protection in said active connection between said second base station (106) and said mobile station (108) after said active connection has been handed over from said first base station (104) to said second base station (106).

6. A mobile communication network comprising a first base station, a second base station and the mobile communication network component according to claim 5.

7. The mobile communication network of claim 6, further comprising:
- a time base (302);
- means for synchronizing said first base station (104) and said second base station (106) by said time base (302);
- means for using the time given by said time base (302) in downlink packet numbers (142, 144, 146), said downlink packet numbers being comprised in packets sent from said first base station (104) and second base station (106) to said mobile station (108), said downlink packet numbers fulfil said given condition.

8. A computer program product (118) comprising computer executable instruction, said instructions being adapted to perform the steps:
- detecting during an active connection between a mobile station (108) and a first base station (104) of a mobile communication network (102) that a handover of said mobile station (108) from said first base station (104) to a second base station (106) of the mobile communication network (102) is scheduled, wherein in said active connection a sequence of uplink packets (124, 126, 128) is received from said mobile station (108) by said first base station (104), wherein each uplink packet of said sequence of uplink packets comprises an uplink packet number (124, 126, 128), and wherein the uplink packet numbers (136, 138, 140) of consecutive uplink packets (124, 126,128) fulfil a given condition;
- sending a first value (122) to said second base station (106) before said handover, said first value (122) relating to an uplink packet number, **characterized by** the first value being only valid for a given period of time with respect to the time stamp;
- using said first value (122) for said replay protection in said active connection between the second base station (104) and said mobile station (108) after said connection has been handed over from said first base station (104) to said second base station (106) and if the first value is valid.

## Patentansprüche

1. Ein Verfahren zum Optimieren des Wiedergabeschutzes in einem Mobilfunknetz (102), wobei das besagte Mobilfunknetz (102) eine erste Basisstation (104) und eine zweite Basisstation (106) umfasst, wobei das besagte Verfahren umfasst:
- Erkennen, während einer aktiven Verbindung zwischen einer Mobilstation (108) und der besagten ersten Basisstation (104), dass ein Handover der besagten Mobilstation (108) von der besagten ersten Basisstation (104) an die besagte zweite Basisstation (106) geplant ist, wobei in der besagten aktiven Verbindung eine Folge von Uplink-Paketen (124, 126, 128) von der besagten Mobilstation (108) an der besagten ersten Basisstation (104) empfangen wird, wobei jedes Uplink-Paket der besagten Folge von Uplink-Paketen (124, 126, 128) eine Uplink-Paketnummer (136, 138, 140) umfasst, wobei die Uplink-Paketnummern (136, 138, 140) von aufeinanderfolgenden Uplink-Paketen (124, 126, 128) eine gegebene Bedingung erfüllen;
- Senden eines ersten Wertes (122) an die besagte zweite Basisstation (106) vor dem besagten Handover, wobei sich der besagte erste Wert (122) auf eine empfangene Uplink-Paketnummer (136, 138, 140) bezieht, **dadurch gekennzeichnet, dass** der erste Wert einen Zeitstempel aufweist, wobei der erste Wert nur für eine gegebene Zeitspanne in Bezug auf den Zeitstempel gültig ist, wobei die zweite Basisstation den ersten Wert (122) für den besagten Wiedergabeschutz in der besagten aktiven Verbindung zwischen der besagten zweiten Basisstation (106) und der besagten Mobilstation (108) verwendet, wenn der besagte erste Wert nach Übernahme der besagten aktiven Verbindung mit der besagten Mobilstation (108) von der besagten ersten Basisstation (104) gültig ist.

2. Das Verfahren nach Anspruch 1, wobei in der besagten aktiven Verbindung eine Folge von Downlink-Paketen (304, 306) von der besagten ersten Basisstation (104) an die besagte Mobilstation (108) gesendet wird, wobei jedes Downlink-Paket der besagten Folge von Downlink-Paketen (304, 306) eine Downlink-Paketnummer (308, 310) umfasst, wobei die Downlink-Paketnummern (308, 310) von aufeinanderfolgenden Downlink-Paketen (304, 306) die besagte gegebene Bedingung erfüllen, wobei das besagte Verfahren weiterhin das Senden eines zweiten Wertes an die besagte zweite Basisstation (106) umfasst, wobei der besagte zweite Wert auf die zuvor an die besagte Mobilstation (108) gesendete Downlink-Paketnummer (308, 310) bezogen ist.

3. Das Verfahren nach Anspruch 1 oder 2, wobei die besagte gegebene Bedingung ist, dass die Uplink-Paketnummern von aufeinanderfolgenden Uplink-Paketen ansteigen, und dass die Downlink-Paketnummern von aufeinanderfolgenden Donwlink-Paketen ansteigen.

4. Das Verfahren nach einem beliebigen der Ansprüche 1 bis 3, wobei das besagte Mobilfunknetz (102) eine Zeitbasis (302) umfasst, wobei die besagte erste Basisstation (104) und die besagte zweite Basisstation (106) über die besagte Zeitbasis (302) synchronisiert werden, wobei die besagte Downlink-Paketnummer (308, 310) von von der besagten Zeitbasis (302) gegebenen Zeit abhängig ist.

5. Eine Mobilfunknetzkomponente (102), umfassend:
- Mittel zum Erkennen, während einer aktiven Verbindung zwischen einer Mobilstation (108) und einer ersten Basisstation (104) eines Mobilfunknetzes (102), dass ein Handover von der besagten ersten Basisstation (104) an eine zweite Basisstation (106) des besagten Mobilfunknetzes (102) geplant ist, wobei in der besagten aktiven Verbindung eine Folge von Uplink-Paketen (124, 126, 128) von der besagten Mobilstation (108) an der besagten ersten Basisstation (104) empfangen wird, wobei jedes Uplink-Paket der besagten Folge von Uplink-Paketen eine Uplink-Paketnummer (136, 138, 140) umfasst, und wobei die Uplink-Paketnummern (136, 138, 140) von aufeinanderfolgenden Uplink-Paketen (124, 126, 128) eine gegebene Bedingung erfüllen;
- Mittel zum Senden eines ersten Wertes (122) an die besagte zweite Basisstation, wobei der besagte erste Wert (122) auf eine empfangene Uplink-Paketnummer (136, 138, 140) bezogen ist, **dadurch gekennzeichnet, dass** der erste Wert nur für eine gegebene Zeitspanne in Bezug auf den Zeitstempel gültig ist;
- Mittel zum Empfangen des besagten ersten Wertes (122);
- Mittel zum Verwenden des besagten ersten Wertes (122) für den Wiedergabeschutz in der besagten aktiven Verbindung zwischen der besagten zweiten Basisstation (106) und der besagten Mobilstation (108), nachdem die besagte aktive Verbindung von der besagten ersten Basisstation (104) an die besagte zweite Basisstation (106) übergeben wurde.

6. Ein Mobilfunknetz mit einer ersten Basisstation, einer zweiten Basisstation und der Mobilfunknetzkomponente nach Anspruch 5.

7. Das Mobilfunknetz nach Anspruch 6, weiterhin umfassend:
- Eine Zeitbasis (302);
- Mittel zum Synchronisieren der besagten ersten Basisstation (104) und der besagten zweiten Basisstation (106) durch die besagte Zeitbasis (302);
- Mittel zum Verwenden der von der besagten Zeitbasis (302) gegebenen Zeit in Downlink-Paketnummern (142, 144, 146), wobei die besagten Downlink-Paketnummern in von der besagten ersten Basisstation (104) und der besagten zweiten Basisstation (106) an die besagte Mobilstation (108) gesendeten Paketen enthalten sind, wobei die besagten Downlink-Paketnummern die besagte gegebene Bedingung erfüllen.

8. Ein Computerprogramm-Produkt (118), umfassend computerausführbare Befehle, wobei die besagten Befehle für das Durchführen der folgenden Schritte bestimmt sind:
- Erkennen, während einer aktiven Verbindung zwischen einer Mobilstation (108) und einer ersten Basisstation (104) eines Mobilfunknetzes (102), dass ein Handover der besagten Mobilstation (108) von der besagten ersten Basisstation (104) an eine zweite Basisstation (106) des besagten Mobilfunknetzes (102) geplant ist, wobei in der besagten aktiven Verbindung eine Folge von Uplink-Paketen (124, 126, 128) von der besagten Mobilstation (108) an der besagten ersten Basisstation (104) empfangen wird, wobei jedes Uplink-Paket (136, 138, 140) umfasst, und wobei die Uplink-Paketnummern (136, 138, 140) von aufeinanderfolgenden Uplink-Paketen (124, 126, 128) eine gegebene Bedingung erfüllen;
- Senden eines ersten Wertes (122) an die besagte zweite Basisstation (106) vor dem besagten Handover, wobei der besagte erste Wert (122) auf eine Uplink-Paketnummer bezogen ist, **dadurch gekennzeichnet, dass** der erste Wert nur für eine gegebene Zeitspanne in Bezug auf den Zeitstempel gültig ist;
- Verwenden des besagten ersten Wertes (122) für den Wiedergabeschutz in der besagten aktiven Verbindung zwischen der besagten zweiten Basisstation (106) und der besagten Mobilstation (108), nachdem die besagte Verbindung von der besagten ersten Basisstation (104) an die besagte zweite Basisstation (106) übergeben wurde und wenn der besagte erste Wert gültig ist.

## Revendications

1. Procédé d'optimisation de la protection contre la retransmission dans un réseau de communication mobile (102), ledit réseau de communication mobile (102) comprenant une première station de base (104) et une deuxième station de base (106), ledit procédé comprenant :
- la détection, durant une connexion active entre une station mobile (108) et ladite première station de base (104), de la planification d'un transfert de ladite station mobile (108) entre ladite première station de base (104) et ladite deuxième station de base (106), dans lequel, dans ladite connexion active, une séquence de paquets en liaison montante (124, 126, 128) est reçue depuis ladite station mobile (108) par ladite première station de base (104), dans lequel chaque paquet en liaison montante de ladite séquence de paquets en liaison montante (124, 126, 128) comporte un numéro de paquet en liaison montante (136, 138, 140), dans lequel les numéros de paquets en liaison montante (136, 138, 140) de paquets en liaison montante (124, 126, 128) consécutifs répondent à une condition donnée ;
- l'envoi d'une première valeur (122) à ladite deuxième station de base (106) avant ledit transfert, ladite première valeur (122) se rapportant à un numéro de paquet en liaison montante (136, 138, 140) reçu **caractérisé en ce que** la première valeur présente une estampille temporelle, dans lequel la première valeur n'est valide que pendant une période donnée par rapport à l'estampille temporelle, dans lequel la deuxième station de base utilise la première valeur (122) pour ladite protection contre la retransmission dans ladite connexion active entre ladite deuxième station de base (106) et ladite station mobile (108) si ladite première valeur est valide après avoir pris le relais de ladite connexion active avec ladite station mobile (108) à partir de ladite première station de base (104).

2. Procédé selon la revendication 1, dans lequel, dans ladite connexion active, une séquence de paquets en liaison descendante (304, 306) est envoyée par ladite première station de base (104) à ladite station mobile (108), dans lequel chaque paquet en liaison descendante de ladite séquence de paquets en liaison descendante (304, 306) comporte un numéro de paquet en liaison descendante (308, 310), dans lequel les numéros de paquets en liaison descendante (308, 310) de paquets en liaison descendante (304, 306) consécutifs répondent à ladite condition donnée, ledit procédé comprenant en outre l'envoi d'une deuxième valeur à ladite deuxième station de base (106), ladite deuxième valeur se rapportant au numéro de paquet en liaison descendante (308, 310) envoyé précédemment à ladite station mobile (108).

3. Procédé selon la revendication 1 ou 2, dans lequel ladite condition donnée est que les numéros de paquets en liaison montante de paquets en liaison montante consécutifs augmentent, et que les numéros de paquets en liaison descendante de paquets en liaison descendante consécutifs augmentent.

4. Procédé selon l'une quelconque des revendications 1 à 3, dans lequel ledit réseau de communication mobile (102) comporte une base de temps (302), dans lequel ladite première station de base (104) et ladite deuxième station de base (106) sont synchronisées par l'intermédiaire de ladite base de temps (302), dans lequel ledit numéro de paquet en liaison descendante (308, 310) dépend du temps donné par ladite base de temps (302).

5. Composant de réseau de communication mobile (102) comprenant :
- moyens pour détecter, durant une connexion active entre une station mobile (108) et une première station de base (104) d'un réseau de communication mobile (102), la planification d'un transfert entre ladite première station de base (104) et une deuxième station de base (106) dudit réseau de communication mobile (102), dans lequel, dans ladite connexion active, une séquence de paquets en liaison montante (124, 126, 128) est envoyée à ladite première station de base (104) par ladite station mobile (108), chaque paquet de ladite séquence de paquets en liaison montante comportant un numéro de paquet en liaison montante (136, 138, 140), et dans lequel les numéros de paquets en liaison montante (136, 138, 140) de paquets en liaison montante (124, 126, 128) consécutifs répondent à une condition donnée ;
- moyens pour envoyer une première valeur (122) à ladite deuxième station de base, ladite première valeur (122) se rapportant à un numéro de paquet en liaison montante (136, 138, 140) reçu, **caractérisé en ce que** la première valeur n'est valide que pendant une période donnée par rapport à l'estampille temporelle ;
- moyens pour recevoir ladite première valeur (122) ;
- moyens pour utiliser ladite première valeur (122) pour la protection contre la retransmission dans ladite connexion active entre ladite deuxième station de base (106) et ladite station mobile (108) après que ladite connexion active a été transférée de ladite première station de base (104) à ladite deuxième station de base (106).

6. Réseau de communication mobile comprenant une première station de base, une deuxième station de base et le composant de réseau de communication mobile selon la revendication 5.

7. Réseau de communication mobile selon la revendication 6, comprenant en outre :
- une base de temps (302) ;
- moyens pour synchroniser ladite première station de base (104) et ladite deuxième station de base (106) au moyen de ladite base de temps (302),
- moyens pour utiliser le temps donné par ladite base de temps (302) dans les numéros de paquets en liaison descendante (142, 144, 146), lesdits numéros de paquets en liaison descendante étant compris dans les paquets envoyés par lesdites première station de base (104) et deuxième station de base (106) à ladite station mobile (108), lesdits numéros de paquets en liaison descendante répondant à ladite condition donnée.

8. Produit de programme informatique (118) comprenant des instructions exécutables par un ordinateur, lesdites instructions étant adaptées pour exécuter les étapes suivantes :
- détecter, durant une connexion active entre une station mobile (108) et une première station de base (104) d'un réseau de communication mobile (102), la planification d'un transfert de ladite station mobile (108) entre ladite première station de base (104) et une deuxième station de base (106) du réseau de communication mobile (102), dans lequel, dans ladite connexion active, une séquence de paquets en liaison montante (124, 126, 128) est reçue depuis ladite station mobile (108) par ladite première station de base (104), dans lequel chaque paquet en liaison montante de ladite séquence de paquets en liaison montante comporte un numéro de paquet en liaison montante (136, 138, 140), et dans lequel les numéros de paquets en liaison montante (136, 138, 140) de paquets en liaison montante (124, 126, 128) consécutifs répondent à une condition donnée ;
- envoyer une première valeur (122) à ladite deuxième station de base (106) avant ledit transfert, ladite première valeur (122) se rapportant à un numéro de paquet en liaison montante, **caractérisé en ce que** la première valeur n'est valide que pendant une période donnée par rapport à l'estampille temporelle ;
- utiliser ladite première valeur (122) pour ladite protection contre la retransmission dans ladite connexion active entre la deuxième station de base (106) et ladite station mobile (108) après que ladite connexion a été transférée de ladite première station de base (104) à ladite deuxième station de base (106) et si la première valeur est valide.
